# EUROPÄISCHE PATENTSCHRIFT

(11) **EP 1 633 598 B1**
(45) Veröffentlichungstag und Bekanntmachung des Hinweises auf die Patenterteilung: **09.01.2008**
(21) Anmeldenummer: 04741557.5
(22) Anmeldetag: 12.05.2004
(51) Int. Cl.: B60Q 1/48, B60Q 9/00, B62D 15/02

(54) **VERFAHREN ZUR UNTERSTUETZUNG EINES EINPARKVORGANGS EINES FAHRZEUGS**
PARKING ASSISTANCE METHOD FOR A VEHICLE
PROCEDE D'ASSISTANCE AU PARCAGE D'UN VEHICULE

(30) Priorität: 02.06.2003 DE 10324810
(43) Veröffentlichungstag der Anmeldung: 15.03.2006
(73) Patentinhaber: ROBERT BOSCH GMBH, 70442 Stuttgart (DE)
(72) Erfinder: ENGELN, Arnd, 72072 Tuebingen (DE)
(86) Internationale Anmeldenummer: PCT/EP2004/050774
(87) Internationale Veröffentlichungsnummer: WO 2004/106114

(56) Entgegenhaltungen:
- EP-A- 1 170 171
- EP-A- 1 297 999
- WO-A-01/25054
- WO-A-01/74643
- DE-A- 10 109 680
- DE-A- 19 809 416
- FR-A- 2 728 859
- US-A- 5 742 141

## Beschreibung

Die Erfindung betrifft ein Verfahren zur Unterstützung eines Einparkvorgangs eines Fahrzeugs.

Einparkhilfen für Fahrzeuge ermitteln im Allgemeinen Abstände des Fahrzeugs zu Hindernissen, um Parkschäden am eigenen Fahrzeug und an fremden Fahrzeugen sowie an anderen Personen und Objekten zu vermeiden. Die Anzeige des ermittelten Abstandes kann hierbei zum einen optisch erfolgen. Bei optischen Anzeigen wird jedoch das Blickverhalten des Fahrers auf die Anzeigeeinrichtung gerichtet, wodurch seine Aufmerksamkeit gegenüber anderen sich nähernden Objekten, z. B. Fahrzeugen oder die Straße überquerenden Passanten, beeinträchtigt ist. Akustische Anzeigen erfordern keine Blickkonzentration, jedoch setzen sie einen vergleichsweise hohen Lembedarf beim Fahrer voraus, um die Systemanweisungen sicher verstehen und angemessen umsetzen zu können. Weiterhin werden akustische Anzeigen oftmals als störend empfunden.

Sowohl optische als auch akustische Anzeigen bzw. Rückmeldeformen beinhalten zudem dem Nachteil, dass sie nicht diskret erfolgen. Eventuell anwesende Beifahrer oder Mitinsassen bemerken, dass der Fahrer für den Einparkvorgang eine Einparkhilfe benutzt; daher wird ggf. der Fahrer im Beisein von Mitfahrern in manchen Einparksituationen eine vorhandene Einparkhilfe nicht verwenden, um nicht Zweifel an seinem Fahrvermögen zu wecken.

Die DE 195 38 894 A1 zeigt ein Navigationssystem für ein Fahrzeug mit einer Navigationseinheit, in der als Navigationsinformationen z. B. Entfernungsinformationen erzeugt werden, welche über ein Bewegungselement in Drehbewegungen des Lenkrades umgewandelt werden. Hierbei wird zur Anzeige eines Abbiegevorgangs ein Drehimpuls in die entsprechende Richtung auf das Lenkrad eingegeben. Der Drehwinkel des Drehimpulses ist hierbei z. B. kleiner zu wählen als das Spiel der Lenkung.

Die DE 38 22 193 A1 zeigt ein Verfahren und eine Vorrichtung zur optischen Anzeige der Abstandswarnung im Kraftfahrzeug, bei der eine Abstandswarnung bei Unterschreiten eines Mindestabstandes zum vorausfahrenden Fahrzeug durch ein haptisches Signal, z. B. Schwingungen des Lenkrads des Fahrzeugs, angezeigt werden. Hierzu erfolgt eine Krafteinwirkung auf die Lenksäule.

Aus der EP 1297 999 A2 ist ein verfahren zum Einparken eines Fahrzeugs bekannt, bei dem eine Zielposition eines Fahrzeugs eingegeben und ein Fahrweg zu der Zielposition berechnet wird. Anschließend wird die Lenkung mit einer Lenkkraft beaufschlagt, um das Fahrzeug entlang dem berechneten Fahrweg zu führen. Weicht das Fahrzeug von dem Fahrweg ab, so wird die wirkende Lenkkraft zur Zurückführung auf den Fahrweg erhöht.

Das erfindungsgemäße Verfahren sowie die erfindungsgemäße Anordnung zur Durchführung des Verfahrens weisen gegenüber den bekannten Verfahren und Anordnungen insbesondere den Vorteil auf, dass ein sicherer Einparkvorgang bei allenfalls geringer Beeinträchtigung der Aufmerksamkeit des Fahrers gewährleistet wird. Weiterhin erfolgt eine diskrete, für Mitfahrer nicht direkt erkennbare Übermittlung von Informationen für den Einparkvorgang an den Fahrer.

Erfindungsgemäß wird durch die haptische Übertragung die Aufmerksamkeit des Fahrers für den weiteren Straßenverkehr, insbesondere auch herannahende Fahrzeuge, Passanten oder andere Objekte, nicht oder allenfalls gering beeinträchtigt. Da er das Lenkrad während des Einparkvorgangs ohnehin mit seinen Händen halten muss, erfolgt eine sichere Übertragung der Informationen ohne zusätzliche Kontrolle oder Überprüfung durch den Fahrer. Erfindungsgemäß werden die Signale, anders als z. B. in dem nicht als Einparkhilfe verwendeten Navigationsverfahren der DE 195 38 894 A1, dem Fahrer nicht kurzzeitig und stoßweise, sondern durch ein auf das Lenkrad bzw. die Lenkspindel eingegebenes Führungs-Lenkmoment übermittelt. Hierdurch erfolgt eine sichere Führung des Fahrers während des Einparkvorgangs, bei der der Fahrer nicht unter Anspannung auf die nächste Signalausgabe warten muss und ggf. die Fahrgeschwindigkeit der Komplexität der jeweiligen Lenkradführung anpassen kann.

Durch die erfindungsgemäße Ausgabe eines Führungs-Lenkmomentes auf die Lenkspindel erfolgt eine diskretere Übertragung von Informationen als durch die Ausgabe von Erschütterungen oder kurzzeitigen Drehimpulsen, da ein Beifahrer derartige Erschütterungen ebenfalls direkt wahrnehmen kann oder zumindest die kurzzeitigen Lenkradausschläge des neben ihm sitzenden Fahrers bemerken kann. Ein Beifahrer wird hierbei nicht bemerken, ob die Hände des Fahrers das Lenkrad führen oder teilweise vom Lenkrad geführt werden.

Das Führungs-Lenkmoment wird aus einem Vergleich eines gemessenen Ist-Lenkwinkels und eines z. B. aus Abstandssensoren ermittelten Soll-Lenkwinkels ermittelt. Das Führungs-Lenkmoment kann hierbei jeweils mit einem konstanten, vorgegebenen Betrag in die entsprechende Richtung eingestellt werden oder z. B. auch in Abhängigkeit von dem noch einzustellenden Differenz-Lenkwinkel geändert werden, z. B. proportional zum Differenz-Lenkwinkel ausgegeben werden, so dass der Fahrer ein Gefühl für den erforderlichen Lenkeinschlag bekommt.

Zur Ermittlung der anzuzeigen Lenkeinschläge kann vorteilhafterweise eine Trajektorie des Lenkvorgangs ermittelt werden und während des Einparkvorgangs somit entsprechend der Trajektorie der Soll-Lenkwinkel jeweils angepasst werden. Ggf. kann eine Änderung des der Drehrichtung des Lenkeinschlags zusätzlich angezeigt werden, z. B. durch einen kurzen Drehimpuls als Gegenstoss zur bisherigen Drehrichtung.

Erfindungsgemäß ist das ausgegebene Führungs-Lenkmoment durch den Fahrer vorteilhafterweise übersteuerbar, indem er ein vom Betrag her größeres, entgegengesetztes Lenkmoment eingibt. Somit kann der Fahrer, ohne die Hände vom Lenkrad nehmen zu müssen oder das Verfahren durch andere Signaleingaben beenden zu müssen, auf eine geänderte Fahrsituation, z. B. eine Gefahrensituation, oder einen geänderten Einparkwunsch hin das Verfahren schnell abbrechen. Vorteilhafterweise sind die Führungs-Lenkmomente so gering, dass sie ohne größeren Kraftaufwand übersteuert werden können.

Der Ist-Lenkwinkel kann durch entsprechende Sensoren an der Lenkspindel ermittelt werden. Die Berechnung des auszugebenen Führungs-Lenkmomentes kann von einer separaten Steuereinrichtung oder auch z. B. durch das für eine Fahrdynamikregelung verwendete Steuergerät erfolgen. Die Ausgabe des Führungs-Lenkmomentes kann insbesondere durch die Servokraft-Hilfseinrichtung, ggf. über ein bereits vorhandenes Spurführungssystem erfolgen.

Vorteilhafterweise wird das erfindungsgemäße Verfahren nur zugelassen, wenn bestimmte Mindestanforderungen erfüllt sind. Diese können insbesondere das Unterschreiten einer Mindestgeschwindigkeit, z.B. ein zügiges Schritttempo, beinhalten; weiterhin kann erfindungsgemäß ein Festhalten des Lenkrades durch den Fahrer erforderlich sein, was z. B. durch ein Lenkrad-Haltesensor ermittelt werden kann. Hierbei wird das Einhalten der Mindestanforderungen durch Ausgabe eines Zusatzsignals an die Steuereinrichtung angezeigt; der Ausgabe des Zusatzsignals entspricht hierbei auch das Fehlen der Ausgabe eines Fehlersignals bzw. Unterbrechungssignals, wenn die Mindestanforderungen nicht eingehalten werden.

Die Erfindung wird im Folgenden anhand der beiliegenden Zeichnungen an einer Ausführungsform näher erläutert. Es zeigen:
Fig. 1 ein Blockdiagramm einer erfindungsgemäßen Anordnung;
Fig. 2 eine Straßenszene mit einer Einparksituation.

Eine Anordnung 1 für eine Einparkhilfe weist ein Lenkrad 2 mit Lenkspindel 3 und Servokrafteinrichtung 5 auf, deren Lenkmoment in bekannter Weise über ein Lenkgetriebe 7 und Lenkstangen 6a, b für den Lenkvorgang auf die Räder übertragen wird. In die Servokrafteinrichtung 5 ist eine Lenkmoment-Voreinstelleinrichtung 10 integriert, die Steuersignale S2 aufnimmt und in Abhängigkeit der Steuersignale S2 auf die Lenkspindel 3 ein Führungs-Lenkmoment ausübt. Eine Steuereinrichtung 11 nimmt von Abstandssensoren 12 Abstands-Messsignale S1, über eine Eingabeeinrichtung 14 ein Startsignal S3 von dem Fahrer und von einer an der Lenkspindel 3 vorgesehenen Lenkwinkel-Messeinrichtung 13 Lenkwinkel-Messsignale S5 auf.

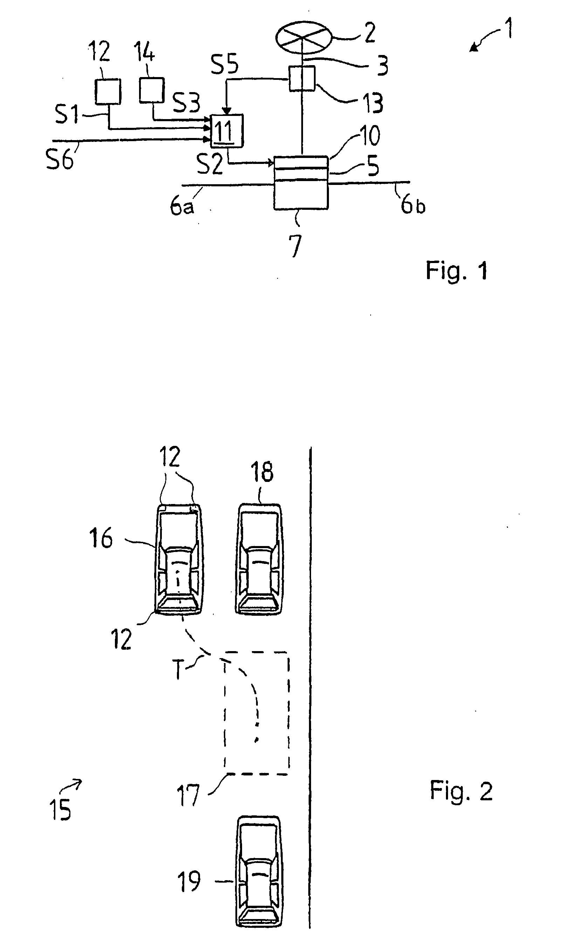

Bei der in Fig. 2 gezeigten Straßenszene 15 will der Fahrer sein Fahrzeug 16 in eine Parklücke 17 zwischen zwei parkende Fahrzeuge 18 und 19 einparken. Hierzu gibt er über die Eingabeeinrichtung 14 ein Startsignal S3 an die Steuereinrichtung 11 und startet hierdurch den Einparkvorgang. Die Steuereinrichtung 11 nimmt Lenkwinkel-Messsignale S5 von der Lenkwinkel-Messeinrichtung 13 auf und ermittelt hieraus den Ist-Lenkwinkel. Aus den Abstands-Messsignalen S1 der Abstandssensoren 12 ermittelt die Steuereinrichtung 11 die Relativposition der Parklücke 20 zur Position des Fahrzeugs 16 und hieraus eine Trajektorie T für den Einparkvorgang des Fahrzeugs 16 in die Parklücke 17, wobei die Trajektorie T ggf. mehrere Fahrvorgänge in Vor- und Rückwärtsrichtung des Fahrzeugs 16 umfassen kann.

Die Steuereinrichtung 11 ermittelt jeweils aktuelle Soll-Lenkwinkel und aus den Soll-Lenkwinkeln und den Ist-Lenkwinkeln ein Führungs-Lenkmoment für die Lenkspindel 3. Anschließend gibt die Steuereinrichtung 11 ein Steuersignal S2 an die Lenkmoment-Voreinstelleinrichtung 10 aus, die das Führungs-Lenkmoment auf die Lenkspindel 3 ausübt. Bei der in Fig. 2 gezeigten Straßenszene 15 wird somit bei einem Rückwärts-Einparkvorgang ein Lenkausschlag nach rechts einzustellen sein, so dass dem Fahrer bei zunächst nicht hinreichend eingeschlagenen Rädern, d. h. einem zu geringem Ist-Lenkwinkel, ein Führungs-Lenkmoment nach rechts auf die Lenkspindel 3 ausgegeben wird. Der Fahrer folgt dem vorgegebenen Lenkmoment, dreht das Lenkrad 2 weiter nach rechts, bis der Ist-Lenkwinkel α den Soll-Lenkwinkel erreicht, woraufhin dem Fahrer durch Nachlassen des Führungs-Lenkmomentes die richtige Lenkwinkeleinstellung angezeigt wird.

Hierbei kann der Fahrer während des Einschlagens des Lenkrads 2 bereits rückwärts fahren und ggf. das Lenkrad 2 jeweils nachführen. Falls der Fahrer ein sich näherndes Objekt entdeckt, kann er auch in die entgegengesetzte Richtung einschlagen, wofür er lediglich das Führungs-Lenkmoment übersteuern muss. Vorteilhaferweise wird das Verfahren bei Erkennen ungünstiger Bedingungen abgebrochen. Hierzu wird ein Zusatzsignal S6 ausgegeben, z. B. bei Überschreiten einer Maximalgeschwindigkeit, z.B. einer Schrittgeschwindigkeit oder höheren Schrittgeschwindigkeit von z. B. 30 km/h, und/oder bei Erkennen, dass der Fahrer das Lenkrad 2 nicht mehr anfasst.

## Patentansprüche

1. Verfahren zur Unterstützung eines Einparkvorgangs eines Fahrzeugs mit mindestens folgenden Schritten: Ermittlung eines Ist-Lenkwinkels einer Lenkspindel (3), Ermittlung eines für einen Einparkvorgang erforderlichen Soll-Lenkwinkels, Ermittlung eines Führungs-Lenkmomentes aus einem Vergleich des Soll-Lenkwinkel und des Ist-Lenkwinkels, Eingabe des Führungs-Lenkmomentes auf die Lenkspindel (3) des Fahrzeugs derartig, dass das Führungs-Lenkmoment auf die Lenkspindel (3) in Richtung auf den Soll-Lenkwinkel wirkt, **dadurch gekennzeichnet, dass** eine Eingabe des Führungs-Lenkmoments auf die Lenkspindel (3) nur dann zugelassen wird, wenn ein Festhalten des Lenkrads durch den Fahrer vorliegt.

2. Verfahren nach Anspruch 1, **dadurch gekennzeichnet, dass** aus Abstands-Messsignalen (S1) des Fahrzeugs (15) eine Trajektorie (T) für den Einparkvorgang und aus der Trajektorie (T) der Soll-Lenkwinkel ermittelt wird.

3. Verfahren nach Anspruch 2, **dadurch gekennzeichnet, dass** die Trajektorie (T) fortlaufend aktualisiert wird.

4. Verfahren nach einem der vorherigen Ansprüche, **dadurch gekennzeichnet, dass** bei Eingabe eines das Führungs-Lenkmoment überschreitenden, gegengerichteten Lenkmomentes auf die Lenkspindel (3) das Führungs-Lenkmoment übersteuerbar ist.

5. Verfahren nach Anspruch 4, **dadurch gekennzeichnet, dass** eine Eingabe des Führungs-Lenkmoments nach einer Übersteuerung des Führungs-Lenkmomentes beendet wird.

6. Verfahren nach einem der vorherigen Ansprüche, **dadurch gekennzeichnet, dass** das Führungs-Lenkmoment nur bei Vorliegen eines Lenkrad-Haltesignals ausgegeben wird.

7. Verfahren nach einem der vorhergehenden Ansprüche, **dadurch gekennzeichnet, dass** Führungs-Lenkmoment nur bei Vorliegen eines Zusatzsignals (S6) auf die Lenkspindel (3) ausgegeben wird und dass das Zusatzsignal (S6) bei Unterschreiten einer Mindestgeschwindigkeit durch das Fahrzeug (15) ausgegeben wird.

8. Verfahren nach einem der vorherigen Ansprüche, **dadurch gekennzeichnet, dass** die Eingabe des Führungs-Lenkmoments durch ein Eingabesignal (S3) des Fahrers gestartet wird.

9. Anordnung zur Durchführung eines Verfahrens nach einem der vorherigen Ansprüche, mit einer Lenkmoment-Voreinstelleinrichtung (10) zum Ausüben eines Führungs-Lenkmomentes auf eine Lenkspindel (3) eines Fahrzeugs (16), einer Sensoreinrichtung (12) zur Ausgabe von Messsignalen (S1) für eine Ermittlung eines Einparkvorgangs, einer Lenkwinkel-Messeinrichtung (13) zur Ermittlung eines Ist-Lenkwinkels einer Lenkspindel (3) des Fahrzeugs (16) und zur Ausgabe eines Lenkwinkel-Messsignals (S5), einer Steuereinrichtung (11) zur Aufnahme des Messsignals (S1) und des Lenkwinkel-Messsignals (S5), Ermittlung eines Ist-Lenkwinkels und eines Führungs-Lenkmomentes, das auf die Lenkspindel (3) in Richtung auf den Soll-Lenkwinkel wirkt, und zur Ausgabe von Steuersignalen (S2) an die Lenkmoment-Voreinstelleinrichtung (10), **gekennzeichnet durch** einen Lenkrad-Haltesensor zum Ermitteln eines Festhalten des Lenkrads **durch** den Fahrer, wobei eine Eingabe des Führungs-Lenkmoments auf die Lenkspindel (3) nur dann zugelassen wird, wenn ein Festhalten des Lenkrads **durch** den Fahrer vorliegt.

10. Anordnung nach Anspruch 9, **dadurch gekennzeichnet, dass** die Lenkmoment-Voreinstelleinrichtung (10) in einer Servokrafteinrichtung (5) integriert ist.

## Claims

1. Method for assisting a parking process of a vehicle, having at least the following steps: determination of an actual steering angle of a steering spindle (3), determination of a setpoint steering angle which is necessary for a parking process, determination of a reference steering torque from a comparison of the setpoint steering angle and of the actual steering angle, inputting of the reference steering torque into the steering spindle (3) of the vehicle in such a way that the reference steering torque acts on the steering spindle (3) in the direction of the setpoint steering angle, **characterized in that** inputting of the reference steering torque into the steering spindle (3) is permitted only if the driver is gripping the steering wheel.

2. Method according to Claim 1, **characterized in that** a trajectory (T) for the parking process is determined from distance measurement signals (S1) of the vehicle (15), and the setpoint steering angle is determined from the trajectory (T).

3. Method according to Claim 2, **characterized in that** the trajectory (T) is updated continuously.

4. Method according to one of the preceding claims, **characterized in that** when an oppositely directed steering torque which exceeds the reference steering torque is input into the steering spindle (3) the reference steering torque can be overridden.

5. Method according to Claim 4, **characterized in that** after the reference steering torque has been overridden, the inputting of the reference steering torque is terminated.

6. Method according to one of the preceding claims, **characterized in that** the reference steering torque is output only when a steering wheel holding signal is present.

7. Method according to one of the preceding claims, **characterized in that** the reference steering torque is output into the steering spindle (3) only when an additional signal (S6) is present, and **in that** the additional signal (S6) is output when the vehicle (15) drops below a minimum velocity.

8. Method according to one of the preceding claims, **characterized in that** the inputting of the reference steering torque is started by an input signal (S3) from the driver.

9. Arrangement for carrying out a method according to one of the preceding claims, having a steering torque pre-setting device (10) for applying a reference steering torque to a steering spindle (3) of a vehicle (16), a sensor device (12) for outputting measurement signals (S1) for determining a parking process, a steering angle measurement device (13) for determining an actual steering angle of a steering spindle (3) of the vehicle (16) and for outputting a steering angle measurement signal (S5), a control device (11) for picking up the measurement signal (S1) and the steering angle measurement signal (S5), determination of an actual steering angle and of a reference steering torque which acts on the steering spindle (3) in the direction of the setpoint steering angle, and for outputting control signals (S2) to the steering torque pre-setting device (10), **characterized by** a steering wheel holding sensor for determining that the steering wheel is being gripped by the driver, wherein inputting of the reference steering torque into the steering spindle (3) is permitted only if the driver is gripping the steering wheel.

10. Arrangement according to Claim 9, **characterized in that** the steering torque pre-setting device (10) is integrated into a servo device (5).

## Revendications

1. Procédé d'assistance à une manoeuvre de rangement d'un véhicule comprenant au moins les étapes suivantes :
- détermination de l'angle de braquage réel de la colonne de direction (3),
- détermination de l'angle de braquage de consigne nécessaire à la manoeuvre de rangement,
- détermination du couple de braquage-guide à partir de la comparaison de l'angle de braquage de consigne et de l'angle de braquage réel,
- application du couple de braquage-guide à la colonne de direction (3) du véhicule pour que ce couple agisse sur la colonne de direction (3) dans le sens de l'angle de braquage de consigne,
**caractérisé en ce que**
l'application du couple de braquage-guide à la colonne de direction (3) n'est autorisée que si le conducteur tient le volant.

2. Procédé selon la revendication 1,
**caractérisé en ce qu'**
à partir des signaux de mesure de distance (S1) du véhicule (15) on détermine une trajectoire (T) pour la manoeuvre de rangement et à partir de la trajectoire (T) on détermine l'angle de braquage de consigne.

3. Procédé selon la revendication 2,
**caractérisé en ce qu'**
on actualise en permanence la trajectoire (T).

4. Procédé selon l'une des revendications précédentes,
**caractérisé en ce qu'**
à l'introduction d'un couple de braquage antagoniste, dépassant le couple de braquage-guide appliqué à la colonne de direction (3), on surégule le couple de braquage-guide.

5. Procédé selon la revendication 4,
**caractérisé en ce qu'**
on termine l'introduction du couple de braquage-guide après une surrégulation de ce couple.

6. Procédé selon l'une des revendications précédentes,
**caractérisé en ce que**
le couple de braquage-guide est seulement émis en cas de signal de tenue du volant.

7. Procédé selon l'une des revendications précédentes,
**caractérisé en ce que**
le couple de braquage-guide est seulement fourni à la colonne de direction (3) en cas de signal supplémentaire (S6) et
le signal supplémentaire (S6) est émis en cas de dépassement vers le bas, d'une vitesse minimale du véhicule (15).

8. Procédé selon l'une des revendications précédentes,
**caractérisé en ce que**
l'entrée du couple de braquage-guide est lancée par un signal d'entrée (S3) du conducteur.

9. Dispositif pour la mise en oeuvre du procédé selon l'une des revendications précédentes, comprenant :
- une installation de préréglage de couple de braquage (10) pour émettre un couple de braquage de consigne pour une colonne de direction (3) d'un véhicule (6),
- une installation de capteur (12) pour émettre des signaux de mesure (S1) pour déterminer une manoeuvre de rangement,
- une installation de mesure d'angle de braquage (13) pour déterminer l'angle de braquage réel de la colonne de direction (3) du véhicule (16) et pour émettre un signal de mesure d'angle de braquage (S5),
- une installation de commande (11) pour recevoir le signal de mesure (S1) et le signal de mesure d'angle de braquage (S5), pour déterminer un angle de braquage réel et un couple de braquage de consigne appliqués à la colonne de direction (3) pour agir dans le sens de l'angle de braquage de consigne et pour émettre des signaux de commande (S2) destinés à l'installation de préréglage de couple de braquage (10),
**caractérisé par**
un capteur de tenue de volant pour déterminer la tenue du volant par le conducteur,
l'application du couple de braquage-guide à la colonne de direction (3) n'étant autorisée que si le conducteur tient le volant.

10. Dispositif selon la revendication 9,
**caractérisé en ce que**
l'installation de préréglage de couple de braquage (10) est intégrée à une installation d'assistance (5).
